# EUROPÄISCHE PATENTSCHRIFT

(11) **EP 2 111 945 B1**
(45) Veröffentlichungstag und Bekanntmachung des Hinweises auf die Patenterteilung: **10.11.2010**
(21) Anmeldenummer: 09006780.2
(22) Anmeldetag: 21.04.2006
(51) Int. Cl.: B23Q 5/04

(54) **Werkzeugrevolver**
Tool revolver
Tourelle revolver

(30) Priorität: 20.07.2005 DE 102005033890
(43) Veröffentlichungstag der Anmeldung: 28.10.2009
(62) Teilanmeldung aus: 06742630.4
(73) Patentinhaber: Sauter Feinmechanik GmbH, 72555 Metzingen (DE)
(72) Erfinder: Sahm, Detlef Dieter, Dr., 73669 Lichtenwald (DE); Dieringer, Jochen, 72379 Hechingen-Stetten (DE); Linder, Dietmar, 72581 Dettingen (DE)
(74) Vertreter: Bartels & Partner

(56) Entgegenhaltungen:
- US-A- 5 455 993
- US-A1- 2003 046 799
- PATENT ABSTRACTS OF JAPAN Bd. 010, Nr. 196 (M-497), 10. Juli 1986 (1986-07-10) & JP 61 038806 A (ROBOTSUTO GIKEN KK), 24. Februar 1986 (1986-02-24)
- PATENT ABSTRACTS OF JAPAN Bd. 2002, Nr. 04, 4. August 2002 (2002-08-04) & JP 2001 341009 A (NITTO SEIKO CO LTD), 11. Dezember 2001 (2001-12-11)

## Beschreibung

Die Erfindung bezieht sich auf einen Werkzeugrevolver mit einem an einer Werkzeugmaschine anzubringenden oder angebrachten Grundkörper gemäß der Merkmalsausgestaltung des Oberbegriffes des Patentanspruches 1.

Werkzeugrevolver dieser oder vergleichbarer Art sind bekannt. So zeigt die US 6,704,983 B2 einen Werkzeugrevolver, der für den Einsatz bei Drehmaschinen, Bearbeitungszentren und ähnlichen Vorrichtungen, wie Werkzeugmaschinen, vorgesehen ist.

Bei der Benutzung solcher Werkzeugrevolver handelt es sich bei den an den Werkzeugstationen des Revolverkopfes befindlichen Werkzeugen, die zum Einsatz kommen sollen, hauptsächlich um Werkzeuge zur spanabhebenden Bearbeitung, wie Bohr-, Dreh- oder Fräswerkzeuge, wobei zum Anpassen an die jeweilige Bearbeitungsaufgabe die Werkzeuge vom Maschinenbediener gewechselt werden. Regelmäßig kommen bei derartigen Bearbeitungsvorgängen Hilfsmedien, insbesondere in Form von Kühlschmierstoffen zum Einsatz und es besteht grundsätzlich die Gefahr, dass das dahingehende Kühlschmierstoffmittel zusammen mit den bei der Bearbeitung entstehenden Spänen in den Innenraum der Werkzeugscheibe gelangt, was den dort befindlichen Werkzeugantrieb zerstören kann. Letzteres gilt insbesondere dann, wenn durch das eindringende Fluid die Späne oder sonstige Schmutz- sowie Abriebpartikel mitgeführt werden und zu dem im Inneren der Werkzeugscheibe befindlichen Werkzeugantrieb gelangen.

Gattungsgebend ist die JP6103880 6-A Im Hinblick hierauf stellt sich die Erfindung die Aufgabe, einen Werkzeugrevolver zur Verfügung zu stellen, der gegen einen Eintritt von Fluiden und Spänen ins Innere der Werkzeugscheibe wirksam geschützt ist.

Erfindungsgemäß ist diese Aufgabe durch einen Werkzeugrevolver gelöst, der die Merkmale des Patentanspruches 1 in seiner Gesamtheit aufweist.

Wie im kennzeichnenden Teil des Anspruches 1 angegeben, sieht die Erfindung vor, dass jedes Antriebsteil zur Bildung der Antriebsverbindung mit der Werkzeugaufnahme des an der betreffenden Werkzeugstation zu betreibenden Werkzeuges einen am Außenumfang der Werkzeugscheibe offenen, Drehmitnahmeelemente aufweisenden Sitz aufweist, in den der Antriebsschaft der betreffenden Werkzeugaufnahme einsetzbar ist, und dass die jeweilige Werkzeugaufnahme einen am Außenumfang der Werkzeugscheibe anbringbaren, vorzugsweise anschraubbaren Werkzeugträgerkörper aufweist, in dem der Antriebsschaft drehbar gelagert ist, der seinerseits einen Sitz zur Bildung einer Antriebsverbindung zwischen Antriebsschaft der Werkzeugaufnahme und einem zugeordneten Werkzeug bildet.

Bei vorteilhaften Ausführungsbeispielen der Erfindung sind die Antriebsteile so gestaltet, dass sie über einen Großteil ihrer axialen Länge einen Rotationskörper mit kreiszylindrischem Umfang bilden und in ihrem dem antriebsseitigen inneren Kupplungsteil benachbarten, endseitigen Umfangsabschnitt mindestens eine ebene Führungsfläche aufweisen, die Bestandteil einer die Drehposition des Antriebsteiles beim Drehen der Werkzeugscheibe fixierenden Verdrehsicherung bildet. Das Vorhandensein einer die Drehposition des Antriebsteiles beim Drehen der Werkzeugscheibe fixierenden Verdrehsicherung stellt sicher, dass beim Drehen der Werkzeugscheibe und dem Einlaufen einer Werkzeugstation in die Arbeitsposition ein störungsfreier Eingriff zwischen Antriebsteil und innerem, antriebsseitigem Kupplungsteil erfolgen kann.

Vorzugsweise ist die Dichtungsanordnung, die an jeder Werkzeugstation in Zusammenwirkung mit dem Antriebsteil das Innere der Werkzeugscheibe zur Außenseite hin abdichtet, an dem dem Außenumfang der Werkzeugscheibe benachbarten, äußeren kreiszylindrischen Endbereich des Antriebsteiles vorgesehen. In vorteilhafter Weise kann zu diesem Zweck eine Wellendichtung, beispielsweise in Form eines berührenden Radialwellendichtringes vorgesehen sein.

Als werkzeugseitiges, insbesondere revolverseitiges Kupplungsteil kann am jeweiligen Antriebsteil eine diametrale, durchgehende Nut vorgesehen sein, die an dem dem Inneren der Werkzeugscheibe zugekehrten Ende des Antriebsteiles offen ist und deren ebene Seitenwände zu der zumindest einen Führungsfläche parallele Ebenen bilden.

Da die Führungsfläche an den Antriebsteilen Bestandteil einer die Drehposition des Antriebsteiles beim Drehen der Werkzeugscheibe fixierenden Verdrehsicherung bilden kann, eröffnet sich die Möglichkeit, das Antriebsteil vor der Drehbewegung der Werkzeugscheibe in eine solche Drehposition einzustellen, dass die Längsachse der Nut auf die Richtung der Bewegungsbahn beim Drehen ausgerichtet ist, so dass die Kupplungsverbindung durch Einfahren des antriebsseitigen Kupplungsteiles des im Inneren der Werkzeugscheibe befindlichen Werkzeugantriebes in die Nut hergestellt werden kann. Zu diesem Zweck kann als antriebsseitiges Kupplungsteil des inneren Werkzeugantriebes ein Antriebszapfen mit rechteckförmigem Umriß vorgesehen sein, der in der Nut des Antriebsteiles passend aufnehmbar und bei Drehbewegungen der Werkzeugscheibe durch die Nut hindurch bewegbar ist.

Die Verdrehsicherung für die Antriebsteile kann einen Führungskörper aufweisen, der zwischen den Werkzeugstationen eine zur Revolverachse konzentrisch verlaufende Führungsbahn bildet, die sich entlang der vom jeweiligen Antriebsteil beim Drehen der Werkzeugscheibe durchlaufenen Bewegungsbahn erstreckt und entlang deren die jeweilige Führungsfläche des Antriebsteiles beim Drehen der Werkzeugscheibe anliegend geführt ist.

Damit bei derart drehpositioniertem Antriebsteil der Antriebszapfen des inneren Werkzeugantriebes in die Nut des in die Arbeitsposition jeweils einfahrenden Antriebsteiles störungsfrei eintreten kann, ist es erforderlich den Antriebszapfen des inneren Werkzeugantriebes vor Einleiten einer Drehbewegung der Werkzeugscheibe in eine Drehstellung zu bringen, bei der die Seitenwände der Nut des mit dem Antriebszapfen in Kupplungsverbindung stehenden Antriebsteiles und die jeweilige Führungsfläche des Antriebsteiles in zur Führungsbahn parallelen Ebenen liegen.

Wenn es sich bei dem im Inneren der Werkzeugscheibe befindlichen Werkzeugantrieb um einen Elektromotor handelt, dessen Rotorwelle zum Antriebsteil der jeweils in der Arbeitsposition befindlichen Werkzeugstation konzentrisch ist und an ihrem Wellenende den Antriebszapfen bildet, kann ein eine elektrische Drehpositionsbestimmung des Rotors und damit des Antriebszapfens ermöglichender Elektromotor eingesetzt werden. Auch besteht die Möglichkeit über entsprechende Sensoren eine Drehposition zur Bestimmung des Rotors vorzunehmen.

Nachstehend ist die Erfindung anhand eines in der Zeichnung dargestellten Ausführungsbeispieles im einzelnen erläutert. Es zeigen:
- Fig. 1 einen Axialschnitt der an einem abgebrochen gezeichneten Grundkörper gelagerten Werkzeugscheibe des Ausführungsbeispieles des erfindungsgemäßen Werkzeugrevolvers, wobei eine auf die Arbeitsposition ausgerichtete Werkzeugstation sowie eine herkömmliche, an dieser Werkzeugstation anzubringende Werkzeugaufnahme (vor dem Anbringen und ohne darin befindliches Bearbeitungswerkzeug) gezeigt sind;
- Fig. 2 eine gegenüber Fig. 1 vergrößert, abgebrochen, perspektivisch und schematisch vereinfacht gezeichnete Teildarstellung nur des Bereiches der in Arbeitsposition befindlichen Werkzeugstation und
- Fig. 3 eine schematische Diagrammdarstellung zur Erläuterung der Funktionsweise einer Verdrehsicherung anhand einer Schnittdarstellung entsprechend der Linie III-III von Fig. 2.

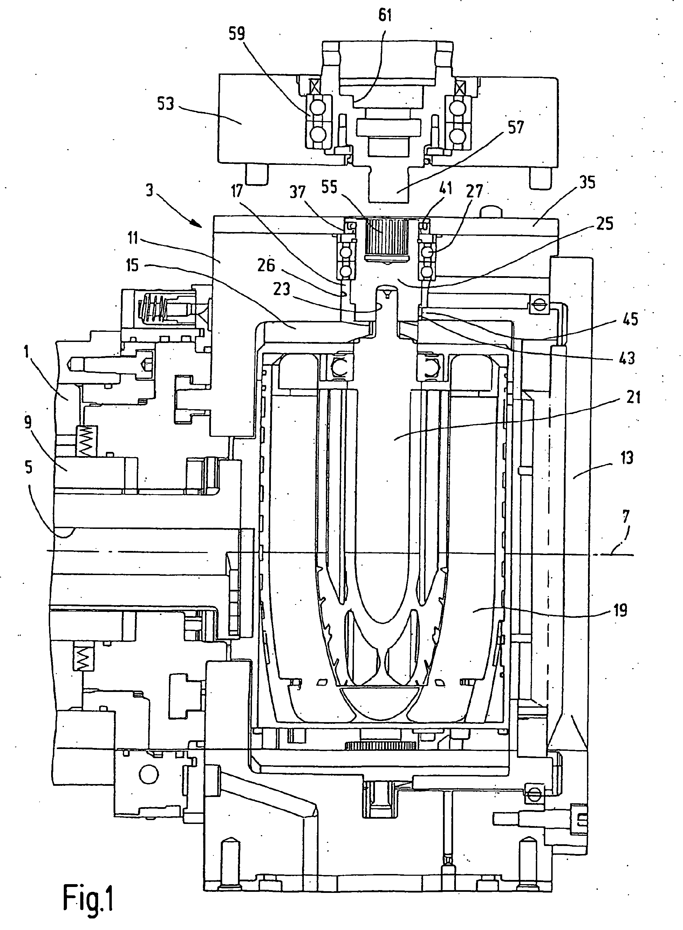

Fig. 1 zeigt in abgebrochener Darstellung lediglich einen Endbereich eines Grundkörpers 1, der mit einer (nicht dargestellten) Werkzeugmaschine verbindbar ist und an der eine als Ganzes mit 3 bezeichnete Werkzeugscheibe gelagert ist. Der Grundkörper 1 weist eine zentrale, stationäre Hohlwelle 5 auf, die eine Revolverachse 7 definiert, um die die Werkzeugscheibe 3 drehbar ist. Der Antrieb für die Drehbewegung um die Revolverachse 7 erfolgt von einem nicht näher dargestellten Werkzeugscheibenantrieb über ein die Hohlwelle 5 umgebendes Antriebsrohr 9. Insbesondere ist die dahingehende Drehbewegung in der Art eines Schwenkantriebes ausgeführt.

Die Werkzeugscheibe 3 weist ein Scheibenkopfgehäuse 11 auf, das zusammen mit einer mit dem Gehäuse 11 verschraubten, frontseitigen Dekkelplatte 13 einen Innenraum 15 im Werkzeugscheibengehäuse 11 umschließt.

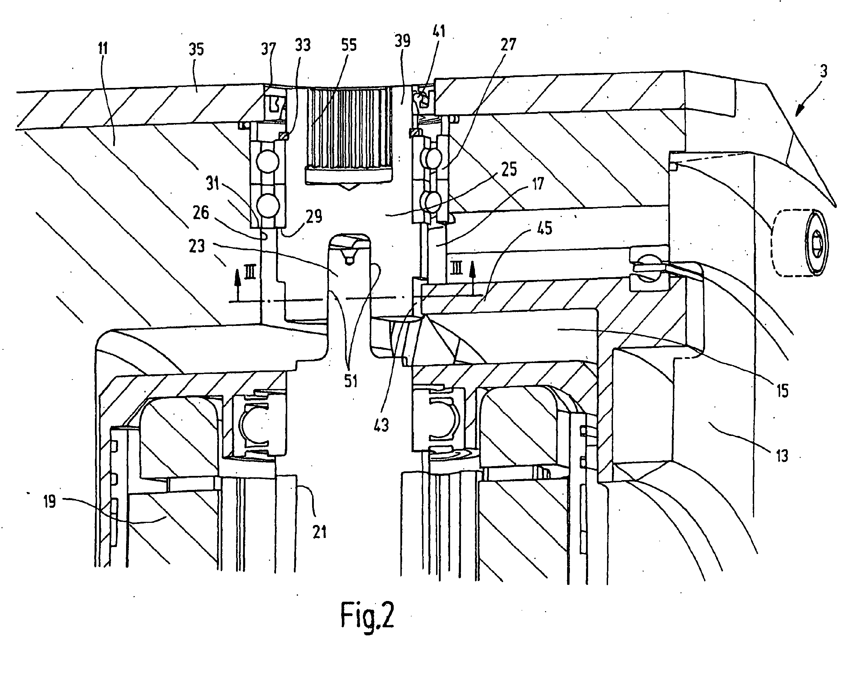

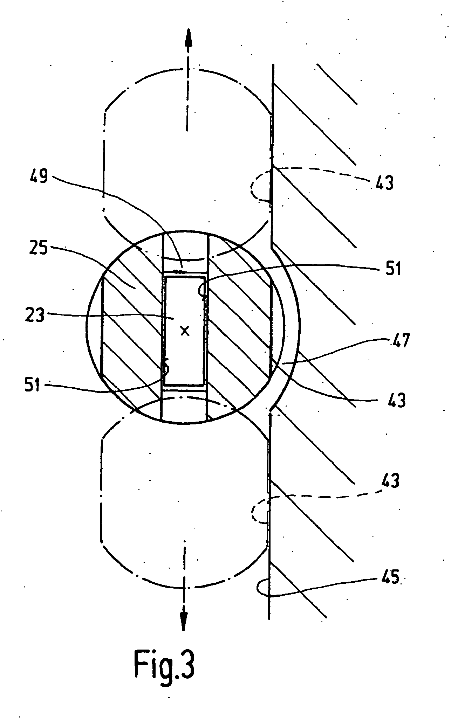

Die Werkzeugscheibe 3 weist an ihrem Umfang eine Mehrzahl von in gleichen gegenseitigen Winkelabständen voneinander angeordneter Werkzeugstationen 17 auf, die, bezogen auf die Revolverachse 7, radial ausgerichtet sind. Die Fig. 1 und 2 zeigen, dass eine der Werkzeugstationen 17 auf die Arbeitsposition eingestellt ist, in der ein im Innenraum 15 der Werkzeugscheibe 3 befindlicher Werkzeugantrieb über sein antriebsseitiges Kupplungsteil ein an der in Arbeitsposition befindlichen Werkzeugstation angebrachtes Bearbeitungswerkzeug antreiben kann. Beim vorliegenden Beispiel weist der Werkzeugantrieb einen im Innenraum 15 gelegenen, mit dem Grundkörper 1 über die Hohlwelle 5 fest verbundenen Elektromotor 19 auf, wobei die Drehachse seiner Rotorwelle 21 koaxial zu der in die Arbeitsposition eingestellten Werkzeugstation 17 ist. Als antriebsseitiges Kupplungsteil bildet die Rotorwelle 21 in ihrem Endabschnitt einen Antriebszapfen 23, der, siehe Fig. 3, einen rechteckigen Querschnitt besitzt. Als mit dem antriebsseitigen Kupplungsteil zusammenwirkendes, werkzeugseitiges Kupplungsteil ist in jeder Werkzeugstation 17 ein Antriebsteil 25 vorgesehen. Jedes Antriebsteil 25 ist in einer betreffenden Durchgangsöffnung 26 des Werkzeugscheibengehäuses 11, die sich in diesem in Radialrichtung erstreckt, drehbar gelagert, und zwar mittels einer Wälzlagerung 27, die sich an einem kreiszylindrischen Umfangsabschnitt des Antriebsteiles 25 befindet.

Wie am deutlichsten aus Fig. 2 zu ersehen ist, sind die Innenwand der Durchgangsöffnung 26 und der kreiszylindrische Umfangsabschnitt des Antriebsteiles 25 jeweils gestuft, so dass sich Schulterflächen 31 bzw. 29 bilden, an denen die Wälzlagerung 27 in Zusammenwirkung mit einem in einer Umfangsnut des Antriebsteiles 25 sitzenden Sicherungsring 33 (Fig. 2) das Antriebsteil 25 axial sichert.

Am radial außenliegenden Ende erstreckt sich im Bereich jeder Werkzeugstation 17 an der Außenseite der Werkzeugscheibe 3 eine Verschlußplatte 35 mit einer zur jeweiligen Werkzeugstation 17 konzentrischen Öffnung 37. Der Durchmesser dieser Öffnung 37 ist größer als der Außendurchmesser des sich in dieser Öffnung 37 erstreckenden kreiszylindrischen Endabschnittes 39 des Antriebsteiles 25. In dem so gebildeten Zwischenraum ist eine Wellendichtung angeordnet, bei der es sich im vorliegenden Fall um einen Radialwellendichtring 41 handelt. Wie aus den Fig. zu ersehen ist, ist dadurch an jeder Werkzeugstation 17 die Öffnung 37 der äußeren Platte 35 gegenüber dem Antriebsteil 25 abgedichtet, so dass wiederum an jeder Werkzeugstation 17 eine Abdichtung zwischen dem Innenraum 15 der Werkzeugscheibe 3 und der Außenseite gegeben ist.

Wie am deutlichsten aus den Fig. 2 und 3 zu ersehen ist, befinden sich am radial innenliegenden Endbereich jedes Antriebsteiles 25 Abflachungen 43, die sich an den kreiszylindrischen Umfangsabschnitt anschließen und die jeweils eine ebene Führungsfläche bilden, die Teil einer Verdrehsicherung für das jeweilige Antriebsteil 25 sind. Diese jeweilige Führungsfläche an den Abflachungen 43 ist bei der Drehbewegung der Werkzeugscheibe 3 entlang eines Führungskörpers 45 geführt, der eine nur im Bereich 47 (Fig. 3) an mindestens einer Werkzeugstation 17 unterbrochene Führungsbahn zwischen den Werkzeugstationen 17 bildet, an der die Antriebsteile 25 mit der an den Abflachungen 43 gebildeten Führungsfläche bei Drehbewegungen der Werkzeugscheibe 3 anliegend geführt und damit gegen Verdrehen gesichert sind.

Um diesen Betriebsablauf zu ermöglichen, weist der Elektromotor 19 eine Einrichtung zur Bestimmung der Drehposition der Rotorwelle 21 und damit des Antriebszapfens 23 auf, so dass das jeweilige Antriebsteil 25, bevor es aus der Arbeitsposition durch Drehen der Werkzeugscheibe 3 heraus bewegt wird, die in Fig. 3 gezeigte Drehposition einnimmt, in der die Abflachungen 43 mit der Führungsbahn am Führungskörper 45 fluchten.

Außerdem befindet sich, wie ebenfalls aus Fig. 3 deutlich zu ersehen ist, im Antriebskörper 25 eine endseits offene, diametral durchgehende Nut 49 mit parallelen Seitenwänden 51, die zu den Abflachungen 43 parallele Ebenen bilden und zwischen denen der Antriebszapfen 23 passend aufgenommen ist. Diese Maßnahmen stellen in Zusammenwirkung sicher, dass bei der Drehbewegung der Werkzeugscheibe 3 um die Revolverachse 7 der Antriebszapfen 23 auf betriebssichere Weise in und außer Eingriff mit der Nut 49 im Antriebsteil 25 einer jeweils betreffenden Werkzeugstation 17 gelangen kann. Als Antriebsmotor kann ein handelsüblicher Elektro-Servomotor dienen. Bei kleineren Baugrößen des Werkzeugrevolvers kann auch ein Winkelgetriebe mit Elektromotor vorgesehen sein, der außerhalb der Werkzeugscheibe 3 (nicht dargestellt) anordenbar ist.

Wie die Fig. 1 und 2 zeigen, weist das Antriebsteil 25 am radial außenliegenden Ende für die Bildung der Antriebsverbindung mit einer an der betreffenden Werkzeugstation zu betreibenden Werkzeugaufnahme 53 einen am Außenumfang der Werkzeugscheibe 3 offenen Sitz 55 auf, der eine innere axiale Mitnahmeverzahnung üblicher Art aufweist, mit der ein komplementär verzahnter Antriebsschaft 57 der an der betreffenden Werkzeugstation 17 anbringbaren Werkzeugaufnahme 53 in Eingriff bringbar ist. Fig. 1 zeigt dabei eine Werkzeugaufnahme 53 herkömmlicher Art (HSK-Typ) ohne in die Werkzeugaufnahme 53 eingesetztes Bearbeitungswerkzeug und vor dem Anbringen an der äußeren Verschlußplatte 35 an der Werkzeugstation 17 (beispielsweise durch Verschrauben). Wie Fig. 1 zeigt, ist bei einer derartigen Werkzeugaufnahme 53 der Antriebsschaft 57 in Form eines Rotationskörpers ausgebildet, der an der Werkzeugaufnahme 53 mittels Wälzlagern 59 gelagert ist und einen gestuften inneren Hohlraum 61 als Sitz für den Werkzeughalter des eigentlichen Bearbeitungswerkzeuges aufweist.

## Patentansprüche

1. Werkzeugrevolver mit einem an einer Werkzeugmaschine anzubringenden oder angebrachten Grundkörper (1), der eine Revolverachse (7) definiert, um die drehbar am Grundkörper (1) eine Werkzeugscheibe (3) gelagert ist, die mehrere, an ihrem Umfang verteilte Werkzeugstationen (17) aufweist, die durch Drehen der Werkzeugscheibe (3) jeweils in mindestens eine Arbeitsposition einstellbar sind, in der ein am Grundkörper (1) angebrachter, im Inneren (15) der Werkzeugscheibe (3) befindlicher Werkzeugantrieb (19) mit seinem antriebsseitigen Kupplungsteil (23) mit einem werkzeugseitigen Antriebsteil für den Antrieb eines Werkzeuges in Kupplungseingriff kommt, das sich an der auf die Arbeitsposition ausgerichteten Werkzeugstation (17) befindet, wobei in jeder Werkzeugstation (17) ein das werkzeugseitige Kupplungsteil bildendes Antriebsteil (25) drehbar gelagert ist, mit dem die Werkzeugaufnahme (53) des jeweiligen, an der Werkzeugstation (17) betreibbaren Werkzeugs in Antriebsverbindung bringbar ist, und wobei an jedem Antriebsteil (25) eine Dichtungsanordnung (41) vorgesehen ist, die an der jeweiligen Werkzeugstation (17) das Innere (15) der Werkzeugscheibe (3) gegenüber der Außenseite abdichtet, **dadurch gekennzeichnet, dass** jedes Antriebsteil (25) zur Bildung der Antriebsverbindung mit der Werkzeugaufnahme (53) des an der betreffenden Werkzeugstation (17) zu betreibenden Werkzeuges einen am Außenumfang der Werkzeugscheibe (3) offenen, Drehmitnahmeelemente aufweisenden Sitz (55) aufweist, in den der Antriebsschaft (57) der betreffenden Werkzeugaufnahme (53) einsetzbar ist, und dass die jeweilige Werkzeugaufnahme (53) einen am Außenumfang der Werkzeugscheibe (3) anbringbaren, vorzugsweise anschraubbaren Werkzeugträgerkörper aufweist, in dem der Antriebsschaft (57) drehbar gelagert ist, der seinerseits einen Sitz (61) zur Bildung einer Antriebsverbindung zwischen Antriebsschaft (57) der Werkzeugaufnahme (53) und einem zugeordneten Werkzeug bildet.

2. Werkzeugrevolver nach Anspruch 1, **dadurch gekennzeichnet, dass** jedes Antriebsteil (25) über einen Großteil seiner axialen Länge einen Rotationskörper mit kreiszylindrischem Umfang bildet und in seinem dem antriebsseitigen Kupplungsteil (23) des inneren Werkzeugantriebes (19) benachbarten, endseitigen Umfangsabschnitt mindestens eine ebene Führungsfläche (43) aufweist, die Bestandteil einer die Drehposition des Antriebsteiles (25) beim Drehen der Werkzeugscheibe (3) fixierenden Verdrehsicherung bildet.

3. Werkzeugrevolver nach Anspruch 2, **dadurch gekennzeichnet, dass** die Dichtungsanordnung (41) an dem dem Außenumfang der Werkzeugscheibe (3) benachbarten, äußeren kreiszylindrischen Endbereich (39) des Antriebsteiles (25) vorgesehen ist.

4. Werkzeugrevolver nach Anspruch 2 oder 3, **dadurch gekennzeichnet, dass** als werkzeugseitiges Kupplungsteil am jeweiligen Antriebsteil (25) eine diametrale, durchgehende Nut (49) vorgesehen ist, die an dem dem Inneren (15) der Werkzeugscheibe (3) zugekehrten Ende des Antriebsteiles (25) offen ist und deren ebene Seitenwände (51) zu der zumindest einen Führungsfläche (43) parallele Ebenen bilden.

5. Werkzeugrevolver nach Anspruch 4, **dadurch gekennzeichnet, dass** das antriebsseitige Kupplungsteil (23) des im Inneren der Werkzeugscheibe (3) befindlichen Werkzeugantriebes (19) mindestens einen Antriebszapfen mit rechteckförmigem Querschnitt aufweist, der in der Nut (49) des
Antriebsteiles (25) passend aufnehmbar und bei Drehbewegungen der Werkzeugscheibe (3) durch die Nut (49) hindurch bewegbar ist.

6. Werkzeugrevolver nach Anspruch 5, **dadurch gekennzeichnet, dass** die 5 Verdrehsicherung für die Antriebsteile (25) einen Führungskörper aufweist, der zwischen den Werkzeugstationen (17) eine zur Revolverachse (7) konzentrisch verlaufende Führungsbahn (45) bildet, die sich entlang der vom jeweiligen Antriebsteil (25) beim Drehen der Werkzeugscheibe (3) durchlaufenen Bewegungsbahn erstreckt und entlang deren die jeweilige Führungsfläche (43) des Antriebsteiles (25) beim Drehen der Werkzeugscheibe (3) anliegend geführt ist.

7. Werkzeugrevolver nach Anspruch 6, **gekennzeichnet durch** eine Einrichtung zur Drehpositionierung des antriebsseitigen Kupplungsteiles des Werkzeugantriebes (19) dergestalt, dass dessen Antriebszapfen (23) das Antriebsteil (25) in eine Drehstellung bringt, in der die Seitenwände (51) der Nut (49) und die jeweilige Führungsfläche (43) des Antriebsteiles (25) in zur Führungsbahn (45) parallelen Ebenen liegen.

8. Werkzeugrevolver nach Anspruch 7, **dadurch gekennzeichnet, dass** der im Inneren (15) der Werkzeugscheibe (3) befindliche Werkzeugantrieb einen Elektromotor (19) aufweist, dessen Rotorwelle (21) zum Antriebsteil (25) der jeweils in der Arbeitsposition befindlichen Werkzeugstation (17) konzentrisch ist und an ihrem Wellenende den Antriebszapfen (23) bildet.

9. Werkzeugrevolver nach Anspruch 8, **dadurch gekennzeichnet, dass** ein eine elektrische Drehpositionsbestimmung des Rotors (21) ermöglichender Elektromotor (19) vorgesehen ist.

## Claims

1. A tool revolver comprising a base body (1) to be attached or attached to a machine tool and which defines a revolver axis (7), about which a tool disc (3) is rotatably mounted on the base body (1), which has a number of tool stations (17) distributed around its periphery and which, by rotating the tool disc (3), can be set in at least one working position respectively in which a tool drive (19) attached to the base body (1) and located in the interior (15) of the tool disc (3) comes with its drive side coupling part (23) into coupling engagement with a tool side drive
part for the drive of a tool which is located on the tool station (17) aligned to the working position, there being rotatably mounted in each tool station (17) a drive part (25) forming the coupling part on the tool side, with which the tool receiving element (53) of the respective tool operable on the tool station (17) can be brought into drive connection, and on each drive part (25) a sealing arrangement (41) being provided which on the respective tool station (17) seals the interior (15) of the tool disc (3) from the outside, **characterised in that** every drive part (25) has, in order to form the drive connection to the tool receiving element (53) of the tool to be operated on the tool station (17) in question, a seat open on the outer periphery of the tool disc (3) and having rotary entrainment elements (55) into which the drive shaft (57) of the tool receiving element (53) in question can be inserted, and that the respective tool receiving element (53) has a tool carrier element that can be attached, preferably screwed, to the outer periphery of the tool disc (3) and in which the drive shaft (57) is rotatably mounted, which itself forms a seat (61) in order to form a drive connection between the drive shaft (57) of the tool receiving element (53) and an assigned tool.

2. The tool revolver according to Claim 1, **characterised in that** each drive part (25) forms over a large part of its axial length a rotation body with a circular cylindrical circumference, and in its end side peripheral section adjacent to the drive side coupling part (23) of the inner tool drive (19) has at least one level guide surface (43) which forms a component of an anti-twist device fixing the rotary position of the drive part (25) upon rotating the tool disc (3).

3. The tool revolver according to Claim 2, **characterised in that** the sealing arrangement (41) is provided on the outer circular cylindrical end region (39) of the drive part (25) adjacent to the outer periphery of the tool disc (3).

4. The tool revolver according to Claim 2 or 3, **characterised in that** there is provided as a tool side coupling part on the respective drive part (25) a diametric, continuous groove (49) which is open on the end of the drive part (25) facing towards the interior (15) of the tool disc (3), and the level side walls (51) of which form planes parallel to the at least one guide surface (43).

5. The tool revolver according to Claim 4, **characterised in that** the drive side coupling part (23) of the tool drive (19) located in the interior of the tool disc (3) has at least one drive pin with a rectangular cross-section which can be received fitting in the groove (49) of the drive part (25), and with rotating movements of the tool disc (3) can be moved through the groove (49).

6. The tool revolver according to Claim 5, **characterised in that** the anti-twist device for the drive parts (25) has a guide element which forms between the tool stations (17) a guide track (45) extending concentrically to the revolver axis (7) and which extends along the trajectory through which the respective drive part (25) passes upon rotation of the tool disc (3), and along which the respective guide surface (43) of the drive part (25) is guided adjacently upon rotation of the tool disc (3).

7. The tool revolver according to Claim 6, **characterised by** a device for the rotary positioning of the drive-side coupling part of the tool drive (19) such that the drive pin (23) of the latter brings the drive part (25) into a rotary position in which the side walls (51) of the groove (49) and the respective guide surface (43) of the drive part (25) lie in planes parallel to the guide track (45).

8. The tool revolver according to Claim 7, **characterised in that** the tool drive located in the interior (15) of the tool disc (3) has an electric motor (19) the rotor shaft (21) of which is concentric to the drive part (25) of the tool station (17) respectively located in the working position and forms on its shaft end the drive pin (23).

9. The tool revolver according to Claim 8, **characterised in that** an electric motor (19) enabling electrical rotary position determination of the rotor (21) is provided.

## Revendications

1. Révolver d'outil, ayant un corps (1) de base à mettre ou mis sur une machine-outil et définissant un axe (3) de révolver autour duquel est monté tournant sur le corps (1) de base un plateau(3) d'outil qui a plusieurs postes (17) d'outil répartis sur son pourtour et pouvant être mis, par rotation du plateau (3) d'outil, respectivement dans au moins une position de travail, dans laquelle un entraînement (19) d'outil mis sur le corps (1) de base et se trouvant à l'intérieur (15) du plateau (3) d'outil vient, par sa partie (23) d'accouplement du côté de l'entraînement, en prise avec une partie d'entraînement du côté de l'outil pour l'entraînement d'un outil qui se trouve au poste (17) d'outil dirigé sur la position de travail, dans lequel dans chaque poste (17) d'outil est montée tournante une partie (25) d'entraînement, qui forme la partie d'accouplement du côté de l'outil et avec laquelle le logement (13) d'outil de l'outil respectif pouvant être mis en fonctionnement sur le poste (17) d'outil peut être mis en liaison d'entraînement, et dans lequel il est prévu, sur chaque partie (25) d'entraînement, un dispositif (41) d'étanchéité, qui rend étanche sur le poste (17) d'outil respectif l'intérieur (15) du plateau(3) d'outil par rapport à l'extérieur, **caractérisé en ce que** chaque partie (25) d'entraînement a, pour la formation de la liaison d'entraînement avec le logement (53) de l'outil à entraîner sur le poste (17) d'outil concerné, un siège (55) ouvert sur le pourtour extérieur du plateau(3) d'outil et ayant des éléments d'entraînement en rotation, siège dans lequel l'arbre (57) d'entraînement du logement (53) d'outil concerné peut être inséré et **en ce que** le logement (53) respectif d'outil a un corps de support d'outil pouvant être mis, en y étant de préférence vissé, sur le pourtour extérieur du plateau (3) d'outil, corps de support dans lequel l'arbre (57) d'entraînement est monté tournant, lequel de son côté forme un siège (61) pour la formation d'une liaison d'entraînement entre l'arbre (57) d'entraînement du logement (53) d'outil et un outil associé.

2. Révolver d'outil suivant la revendication 1, **caractérisé en ce que** chaque partie (25) d'entraînement forme sur une grande partie de sa longueur axiale un corps de révolution de pourtour cylindrique circulaire et a, dans son segment de pourtour d'extrémité, voisin de la partie (23) d'accouplement du côté de l'entraînement, de l'entraînement (19) intérieur de l'outil, au moins une surface (43) plane de guidage, qui forme un constituant d'une sécurité en rotation immobilisant la position en rotation de la partie (25) d'entraînement lors de la rotation du plateau(3) d'outil.

3. Révolver d'outil suivant la revendication 2, **caractérisé en ce que** le dispositif (41) d'étanchéité est prévu pour la zone (39) d'extrémité cylindrique circulaire extérieure et voisine du pourtour extérieur du plateau(3) d'outil de la partie (25) d'entraînement.

4. Révolver d'outil suivant la revendication 2 ou 3, **caractérisé en ce qu'**il est prévu, comme partie d'accouplement du côté de l'outil sur la partie (25) respectivement d'entraînement, une rainure (49) diamétrale continue, qui est ouverte à l'extrémité de la partie (25) d'entraînement, qui est tournée vers l'intérieur (15) du plateau(3) d'outil et dont les parois (51) latérales planes forment des plans parallèles à la au moins une surface (43) de guidage.

5. Révolver d'outil suivant la revendication 4, **caractérisé en ce que** la partie (23) d'accouplement, du côté de l'entraînement, de l'entraînement (19) d'outil se trouvant à l'intérieur du plateau (3) d'outil a au moins un tourillon d'entraînement ayant une surface transversale rectangulaire, qui peut être reçu en s'y adaptant dans la rainure (49) de la partie (25) d'entraînement et qui lors des mouvements de rotation du plateau(3) d'outil, peut être déplacé en traversant la rainure (49).

6. Révolver d'outil suivant la revendication 5, **caractérisé en ce que** le blocage en rotation des parties (25) d'entraînement a un corps de guidage, qui forme entre les postes (17) d'outil une voie (45) de guidage, qui s'étend concentriquement à l'axe (7) du révolver, qui s'étend le long de la voie de déplacement parcourue par la partie (25) d'entraînement respectif lors de la rotation du plateau(3) d'outil et le long de laquelle la surface (43) respective de guidage de la partie (25) d'entraînement est guidée en s'y appliquant lors de la rotation du plateau(3) d'outil.

7. Révolver d'outil suivant la revendication 6, **caractérisé par** un dispositif de mise en disposition en rotation de la partie d'accouplement, du côté de l'entraînement, de l'entraînement (19) d'outil, de façon à ce qu'un tourillon (23) d'entraînement mette la partie (25) d'entraînement dans une position en rotation, dans laquelle les parois (51) latérales de la rainure (49) et la surface (43) respective de guidage de la partie (25) d'entraînement se trouvent dans des plans parallèles à la voie (45) de guidage.

8. Révolver d'outil suivant la revendication 7, **caractérisé en ce que** l'entraînement d'outil, se trouvant à l'intérieur (15) du plateau (3) d'outil, comporte un moteur (19) électrique dont l'arbre (21) rotorique est concentrique à la partie (25) d'entraînement du poste (17) d'outil se trouvant dans la position de travail et forme le tourillon (23) d'entraînement à son bout d'arbre.

9. Révolver d'outil suivant la revendication 8, **caractérisé en ce qu'**il est prévu un moteur (19) électrique permettant une détermination électrique de la position en rotation du rotor (21).
